# EUROPEAN PATENT SPECIFICATION

(11) **EP 3 989 697 B1**
(45) Date of publication and mention of the grant of the patent: **17.07.2024**
(21) Application number: 20736849.9
(22) Date of filing: 17.06.2020
(51) Int. Cl.: A01B 63/00, A01B 71/08, A01B 76/00

(54) **SYSTEM AND METHOD FOR DE-PLUGGING AN AGRICULTURAL IMPLEMENT BY TRIPPING GROUND-ENGAGING TOOLS OF THE IMPLEMENT**
VORRICHTUNG UND VERFAHREN ZUM REINIGEN EINES LANDWIRTSCHAFTLICHEN GERÄTES DURCH AUSLÖSEN VON BODENBERÜHRENDEN WERKZEUGEN DES GERÄTES
SYSTÈME ET MÉTHODE POUR DE-ENCRASSER UN OUTIL AGRICOLE EN DÉCLENCHANT LES OUTILS D'ENGAGEMENT AU SOL DE L'OUTIL

(30) Priority: 26.06.2019 US 201916452999
(43) Date of publication of application: 04.05.2022
(73) Proprietor: CNH Industrial Belgium nv, 8210 Zedelgem (BE)
(72) Inventor: STANHOPE, Trevor, Saskatoon, Saskatchewan S7K 3S5 (CA); HENRY, James W., Saskatoon, Saskatchewan S7K 3S5 (CA); KNOBLOCH, Dean A., Tucson, Arizona 85710 (US)
(74) Representative: CNH Industrial IP Department
(86) International application number: PCT/US2020/038074
(87) International publication number: WO 2020/263645

(56) References cited:
- EP-A1- 3 011 815
- WO-A1-2009/127066
- WO-A1-2018/020310
- US-A1- 2018 352 718

## Description

### FIELD OF THE INVENTION

The present disclosure generally relates to agricultural implements and, more particularly, to systems and methods for de-plugging an agricultural implement by tripping or otherwise lifting one or more ground-engaging tools of the implement out of the soil.

### BACKGROUND OF THE INVENTION

It is well known that, to attain the best agricultural performance from a field, a farmer must cultivate the soil, typically through a tillage operation. Modern farmers perform tillage operations by pulling a tillage implement behind an agricultural work vehicle, such as a tractor. Tillage implements typically include one or more ground-engaging tools configured to loosen and/or otherwise agitate the soil as the implement is moved across the field. For example, the implement may include one or more shanks, harrow discs, leveling blades, rolling baskets, and/or the like.

During tillage operations, field materials, such as residue, soil, rocks, and/or the like, may become trapped or otherwise accumulate on and/or adj acent to one or more of the ground-engaging tools. Such accumulations of field materials may inhibit the operation of the ground-engaging tool(s) in a manner that prevents the tool(s) from providing adequate tillage to the field. In such instances, it is necessary for the operator to take certain corrective actions to remove the accumulated field materials. For example, in such instances, the operator may have to stop the tillage operation and manually remove the accumulated field materials. Such corrective actions are time-consuming and reduce the efficiency of the tillage operation. US2018/352718 discloses a system and a method for automatically de-plugging an agricultural implement.

However, an improved system and method for de-plugging an agricultural implement would be welcomed in the technology.

### SUMMARY OF THE INVENTION

In one aspect, the present invention is directed to a system for de-plugging an agricultural implement. The system includes an implement frame and a ground-engaging tool pivotably coupled to the implement frame. The system also includes an actuator coupled between the ground-engaging tool and the implement frame. The actuator is in turn, configured to move the ground-engaging tool relative to the implement frame between a first position in which the ground-engaging tool penetrates the soil and a second position in which the ground-engaging tool is lifted out of the soil. Furthermore, the system includes a sensor configured to capture data indicative of plugging of the ground-engaging tool. Additionally, the system includes a controller communicatively coupled to the sensor. The controller is configured to determine when the ground-engaging tool is plugged based on the data received from the sensor. Moreover, the controller is further configured to control an operation of the actuator such that the ground engaging tool is moved from the first position to the second position when it is determined that the ground-engaging tool is plugged. After the ground-engaging tool is moved to the second position, the controller is further configured to determine when the ground engaging tool is de-plugged based on the data received from the sensor.

In another aspect, the present invention is directed to a method for de-plugging an agricultural implement. The method includes receiving, with one or more computing devices, data indicative of plugging of a ground-engaging tool of the agricultural implement. The ground-engaging tool being pivotably coupled to a frame of the agricultural implement. The agricultural implement further includes an actuator configured to move the ground-engaging tool relative to the frame between a first position in which the ground-engaging tool penetrates the soil and a second position in which the ground-engaging tool is lifted out of the soil. Furthermore, the method includes determining, with the one or more computing devices, when the ground-engaging tool is plugged based on the received data. Furthermore, the method includes controlling, with the one or more computing devices, an operation of the actuator such that the ground-engaging tool is moved from the first position to the second position when it is determined that the ground-engaging tool is plugged. Additionally, the method includes that, after the ground-engaging tool is moved to the second position, determining, with the one or more computing devices, when the ground-engaging tool is de-plugged based on the received data.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a perspective view of one embodiment of an agricultural implement coupled to a work vehicle in accordance with aspects of the present subject matter;
FIG. 2 illustrates a side view of one embodiment of a ground-engaging tool of an agricultural implement in accordance with aspects of the present subject matter, particularly illustrating the tool positioned at a first or ground-penetrating position;
FIG. 3 illustrates an alternative side view of the ground-engaging tool shown in FIG. 2, particularly illustrating the tool positioned at a second or lifted position;
FIG. 4 illustrates a schematic view of one embodiment of a system for de-plugging an agricultural implement in accordance with aspects of the present subject matter; and
FIG. 5 illustrates a flow diagram of one embodiment of a method for de-plugging an agricultural implement in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems and methods for de-plugging an agricultural implement. For example, a ground-engaging tool of an agricultural implement may be plugged when a sufficient amount of field materials (e.g., soil, residue, and/or the like) has accumulated on and/or adjacent to the tool such that accumulated field materials inhibit the operation of the tool. Specifically, in several embodiments, a controller of the disclosed system may be configured to receive data indicative of plugging of a ground-engaging tool (e.g., a tillage shank) of the agricultural implement. For example, in one embodiment, such data may be received from one or more sensors (e.g., a vision-based sensor(s)) configured to capture data indicative of the amount field materials that has accumulated on and/or adjacent to the ground-engaging tool. Thereafter, the controller may be configured to determine when the ground-engaging tool is plugged based on the received sensor data.

In accordance with aspects of the present subject matter, the controller may be configured initiate "tripping" of the ground-engaging tool to de-plug the agricultural implement. More specifically, the ground-engaging tool may be pivotably coupled to a frame of the agricultural implement. As such, an actuator (e.g., a fluid-driven actuator) may be configured to pivot or otherwise move the ground-engaging tool relative to the implement frame between a first or ground-penetrating position in which the tool penetrates the soil in the field and a second or lifted position in which the tool is lifted out of the soil. In this regard, when it is determined that the ground-engaging tool is plugged, the controller may be configured to control the operation of the actuator such that the tool is moved from the ground-penetrating position to the lifted position. When the ground-engaging tool is at the lifted position, the accumulated field materials plugging the tool may pass underneath and/or around the tool, thereby de-plugging to agricultural implement.

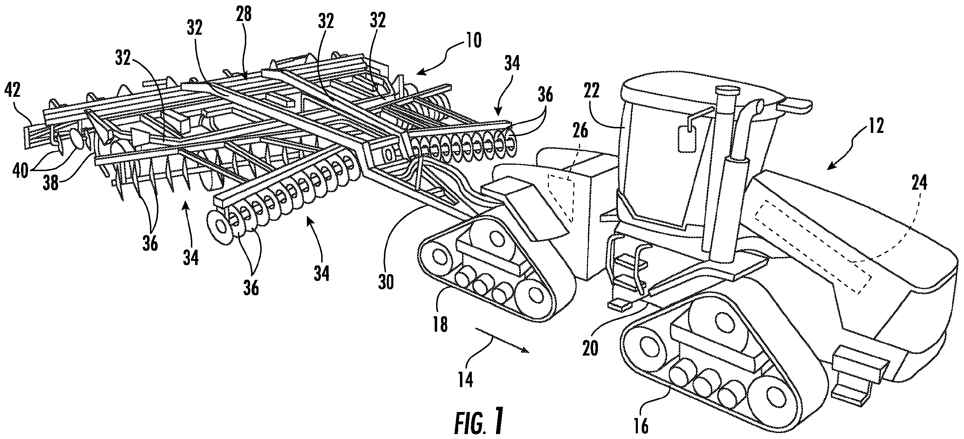

Referring now to the drawings, FIG. 1 illustrates a perspective view of the agricultural implement 10 coupled to a work vehicle 12. In general, the implement 10 may be configured to be towed across a field in a direction of travel (e.g., as indicated by arrow 14 in FIG. 1) by the work vehicle 12. As shown, the implement 10 may be configured as a tillage implement, and the work vehicle 12 may be configured as an agricultural tractor. However, in other embodiments, the implement 10 may be configured as any other suitable type of implement, such as a seed-planting implement, a fertilizer-dispensing implement, and/or the like. Similarly, the work vehicle 12 may be configured as any other suitable type of vehicle, such as an agricultural harvester, a self-propelled sprayer, and/or the like.

As shown in FIG. 1, the work vehicle 12 may include a pair of front track assemblies 16 (one is shown), a pair or rear track assemblies 18 (one is shown), and a frame or chassis 20 coupled to and supported by the track assemblies 16, 18. An operator's cab 22 may be supported by a portion of the chassis 20 and may house various input devices (e.g., a user interface) for permitting an operator to control the operation of one or more components of the work vehicle 12 and/or one or more components of the agricultural implement 10. Additionally, the work vehicle 12 may include an engine 24 and a transmission 26 mounted on the chassis 20. The transmission 26 may be operably coupled to the engine 24 and may provide variably adjusted gear ratios for transferring engine power to the track assemblies 16, 18 via a drive axle assembly (not shown) (or via axles if multiple drive axles are employed).

Additionally, as shown in FIG. 1, the implement 10 may generally include a frame 28 configured to be towed by the vehicle 12 via a pull hitch or tow bar 30 in the direction of travel 14. In general, the frame 28 may include a plurality of structural frame members 32, such as beams, bars, and/or the like, configured to support or couple to a plurality of components. As such, the frame 28 may be configured to support a plurality of ground-engaging tools, such as a plurality of shanks, disc blades, leveling blades, basket assemblies, tines, spikes, and/or the like. In one embodiment, the various ground-engaging tools may be configured to perform a tillage operation or any other suitable ground-engaging operation on the field across which the implement 10 is being towed. For example, in the illustrated embodiment, the frame 28 is configured to support various gangs 34 of disc blades 36, a plurality of ground-engaging shanks 38, a plurality of leveling blades 40, and a plurality of crumbler wheels or basket assemblies 42. However, in alternative embodiments, the frame 28 may be configured to support any other suitable ground-engaging tool(s) or combinations of ground-engaging tools.

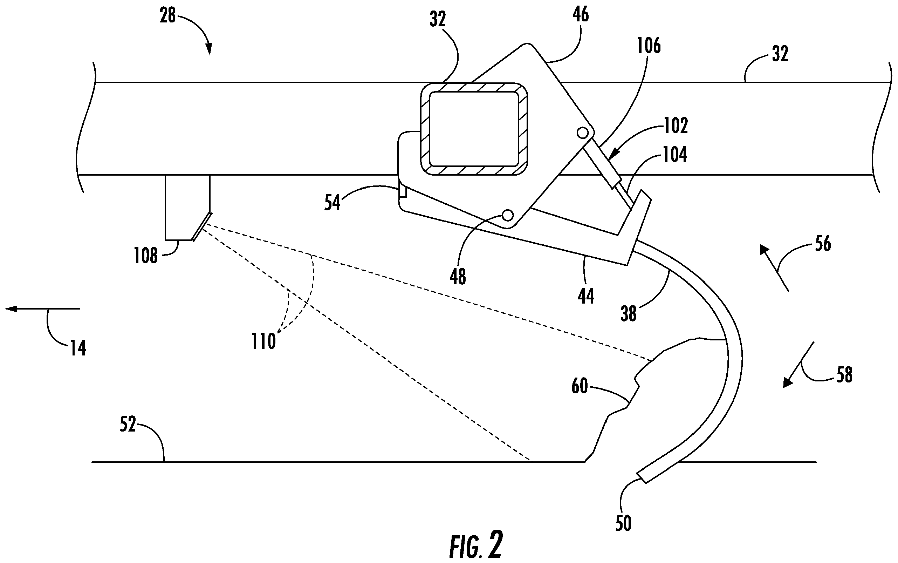

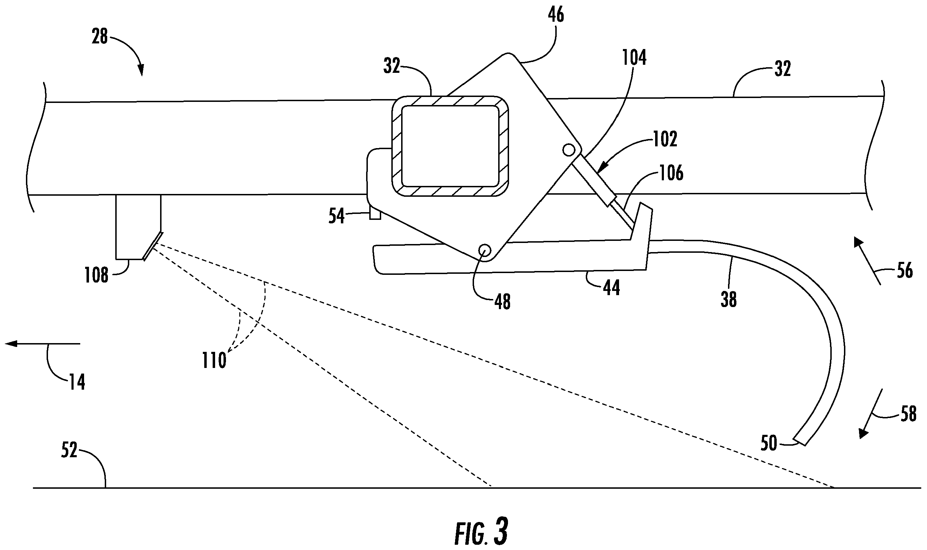

Referring now to FIGS. 2 and 3, differing side views of one embodiment of a shank 38 is illustrated in accordance with aspects of the present subject matter. Specifically, FIG. 2 illustrates the shank 38 when it is positioned at a first or ground-penetrating position. Additionally, FIG. 3 illustrates the shank 38 when it is positioned at a second or lifted position.

As shown in FIGS. 2 and 3, the shank 38 may be coupled to the frame 28 of the implement 10 by a shank holder 44. Specifically, in several embodiments, the shank holder 44 may be pivotably coupled to a shank mount 46 (e.g., at a pivot joint 48), which is, in turn, coupled to one of the frame members 32 of the implement frame 28. The shank 38 may be coupled to and extend from the shank holder 44 along a curved or arcuate profile to a tip 50. The tip 50 may, in turn, be configured to penetrate a soil surface 52 of the field such that the shank 38 engages the soil as the implement 10 is being pulled through the field. However, in alternative embodiments, the shank 38 may be configured in any other suitable manner.

In accordance with aspects of the present subject matter, an actuator 102 may be coupled between the implement frame 28 and the shank 38. In general, the actuator 102 may be configured to pivot or otherwise move the shank 38 relative to the frame 28. As such, in several embodiments, the actuator 102 may be configured to move the shank 38 between a first or ground-penetrating position shown in FIG. 2 and a second or lifted position shown in FIG. 3. Specifically, as shown in FIG. 2, when the shank 38 is at the ground-penetrating position, the shank 38 may penetrate the soil or ground to a desired depth, such as a desired depth for performing a tillage operation on the field. In one embodiment, the ground-penetrating position may be set by a mechanical stop 54. Conversely, as shown in FIG. 3, the shank 38 may be raised or otherwise lifted out of the soil when the shank 38 is at the lifted position. It should be appreciated that the position of the implement frame 28 relative to the soil surface 52 may generally not change when the shank 38 is moved from the ground-penetrating position to the lifted position and/or from the lifted position to the ground-penetrating position.

Additionally, it should be appreciated that the actuator 102 may correspond to any suitable type of actuator configured to pivot or otherwise move the shank 38 between the ground-penetrating and lifted positions. Specifically, in several embodiments, the actuator 102 may correspond to a fluid-driven actuator (e.g., a hydraulic or pneumatic cylinder). As such, in one embodiment, a first end of the actuator 102 (e.g., a rod 104 of the actuator 102) may be coupled to the shank 38, while a second end of the actuator 102 (e.g., the cylinder 106 of the actuator 102) may be coupled to the shank mount 46. The rod 104 of the actuator 102 may be configured to extend and/or retract relative to the cylinder 106 to move the shank 38 relative to the frame 28. For example, the rod 104 may be retracted relative to the cylinder 106 to move the shank 38 in a first pivot direction (e.g., as indicated by arrow 56 in FIGS. 2 and 3) from the ground-penetrating position shown in FIG. 2 to the lifted position shown in FIG. 3. Conversely, the rod 104 may be extended relative to the cylinder 106 to move the shank 38 in a second pivot position (e.g., as indicated by arrow 58 in FIGS. 2 and 3) from the lifted position shown in FIG. 3 to the ground-penetrating position shown in FIG. 2. However, in alternative embodiments, the actuator 102 may correspond to any other suitable type of actuator (e.g., an electric linear actuator) and/or be configured in any other suitable manner that allows the shank 38 to be moved between the ground-penetrating and lifted positions.

Furthermore, the agricultural implement 10 and/or the work vehicle 12 may include sensor 108 for use in detecting plugging of the shank 38. Specifically, in several embodiments, the sensor 108 may be coupled to and/or supported on the implement 10 or the vehicle 12 such that the sensor 108 has a field of view or detection zone (e.g., as indicated by dashed lines 110 in FIGS. 2 and 3) directed toward the shank 38 and/or a portion of the field through which the shank 38 is being moved during the performance of an agricultural operation. As such, the sensor 108 may be configured to capture data indicative of plugging of the shank 38 as the implement 10 is moved across the field. For example, as shown in FIG. 2, in one embodiment, the sensor 108 may be configured to capture data indicative of the amount of field materials 60 (e.g., soil, residue, and/or the like) that has accumulated on and/or adjacent to the shank 38. As will be described below, by analyzing the data captured by the sensor 108, an associated controller may then be configured to determine when the shank 38 is plugged. As indicated above, the shank 38 may be plugged when the accumulation of field materials 60 is sufficient to inhibit the performance of the tillage operation being performed by the shank 38. When it is determined that the shank 38 is plugged, the controller may be configured to control the operation of the actuator 102 such that shank 38 is moved from the ground-penetrating position shown in FIG. 2 to the lifted position shown in FIG. 3. Moving the shank 38 to lifted position may, in turn, allow the accumulate field materials 60 to pass underneath and/or around the shank 38, thereby de-plugging the shank 38.

In general, the sensor 108 may correspond to any suitable sensing device(s) configured to detect or capture data indicative of the plugging of the shank 38. In several embodiments, the sensor 108 may correspond to a suitable vision-based sensor(s) configured to capture images or other vision-based data of the shank 38 and/or the portion of the field adjacent to the shank 38. As such, the amount of field materials 60 that has accumulated on and/or adjacent to the shank 38 may be calculated or estimated by analyzing the content of each image. For instance, in one embodiment, the sensor 108 may correspond to a stereographic camera(s) having two or more lenses with a separate image sensor for each lens to allow the camera(s) to capture stereographic or three-dimensional images. In a further embodiment, the sensor 108 may correspond to any other suitable sensing device(s) configured to detect or capture data indicative of plugging of the shank 38, such as a radar sensor, an acoustic sensor, an electromagnetic sensor, and/or the like.

It should be appreciated that, although the FIGS. 2 and 3 illustrate a single sensor 108, the implement 10 and/or the vehicle 12 may include any number of sensors 108 configured to capture data indicative of plugging of any number of ground-engaging tools (e.g., the discs 36, the shanks 38, the leveling blades 40, and/or the like) of the implement 10. Specifically, in several embodiments, the implement 10 may include a plurality of sensors 108, which each sensor 108 configured to capture data indicative of plugging of one of the ground-engaging tools. For example, in one embodiment, the implement 10 may include the same number of sensors 108 as ground-engaging tools such that there is a sensor 108 configured to capture data indicative plugging of each individual shank 38 mounted on the frame 28. In another embodiment, each sensor 108 may be positioned such that a plurality of adjacent shanks 38 are positioned within its field of view 110. In such an embodiment, each sensor 108 may be configured to capture data indicative of plugging of the plurality of shanks 38. In a further embodiment, a plurality of sensors 108 configured to capture data indicative of plugging of one of the shanks 38.

Moreover, it should be further appreciated that the configuration of the agricultural implement 10 described above and shown in FIGS. 1-3 is provided only to place the present subject matter in an exemplary field of use. Thus, it should be appreciated that the present subject matter may be readily adaptable to any manner of implement configuration.

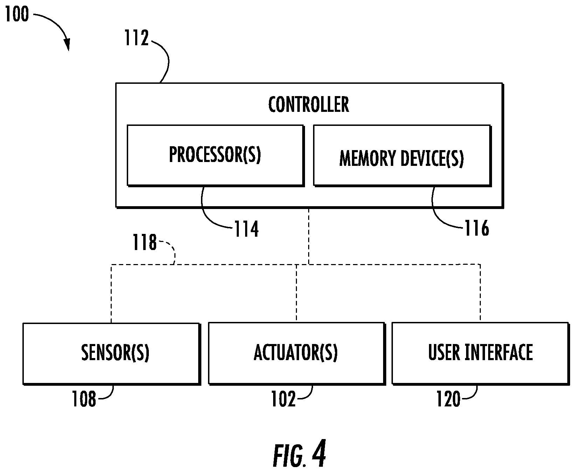

Referring now to FIG. 4, a schematic view of one embodiment of a system 100 for de-plugging an agricultural implement is illustrated in accordance with aspects of the present subject matter. In general, the system 100 will be described herein with reference to the agricultural implement 10 described above with reference to FIGS. 1-3. However, it should be appreciated by those of ordinary skill in the art that the disclosed system 100 may generally be utilized with agricultural implements having any other suitable implement configuration.

As shown in FIG. 4, the system 100 may include a controller 112 positioned on and/or within or otherwise associated with the implement 10 or the vehicle 12. In general, the controller 112 may comprise any suitable processor-based device known in the art, such as a computing device or any suitable combination of computing devices. Thus, in several embodiments, the controller 112 may include one or more processor(s) 114 and associated memory device(s) 116 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 116 of the controller 112 may generally comprise memory element(s) including, but not limited to, a computer readable medium (e.g., random access memory (RAM)), a computer readable non-volatile medium (e.g., a flash memory), a floppy disc, a compact disc-read only memory (CD-ROM), a magneto-optical disc (MOD), a digital versatile disc (DVD), and/or other suitable memory elements. Such memory device(s) 116 may generally be configured to store suitable computerreadable instructions that, when implemented by the processor(s) 114 configure the controller 112 to perform various computer-implemented functions.

In addition, the controller 112 may also include various other suitable components, such as a communications circuit or module, a network interface, one or more input/output channels, a data/control bus and/or the like, to allow controller 112 to be communicatively coupled to any of the various other system components described herein (e.g., the actuator(s) 102 and/or the sensor(s) 108). For instance, as shown in FIG. 4, a communicative link or interface 118 (e.g., a data bus) may be provided between the controller 112 and the components 102, 108 to allow the controller 112 to communicate with such components 102, 108 via any suitable communications protocol (e.g., CANBUS).

It should be appreciated that the controller 112 may correspond to an existing controller(s) of the implement 10 and/or the vehicle 12, itself, or the controller 112 may correspond to a separate processing device. For instance, in one embodiment, the controller 112 may form all or part of a separate plug-in module that may be installed in association with the implement 10 and/or the vehicle 12 to allow for the disclosed systems to be implemented without requiring additional software to be uploaded onto existing control devices of the implement 10 and/or the vehicle 12. It should also be appreciated that the functions of the controller 112 may be performed by a single processor-based device or may be distributed across any number of processor-based devices, in which instance such devices may be considered to form part of the controller 112. For instance, the functions of the controller 112 may be distributed across multiple application-specific controllers, such as an engine controller, a transmission controller, an implement controller, and/or the like.

Furthermore, in one embodiment, the system 100 may also include a user interface 120. More specifically, the user interface 120 may be configured to provide feedback (e.g., feedback or input associated with plugging of the ground-engaging tools of the implement 10) to the operator of the implement/vehicle 10/12. As such, the user interface 120 may include one or more feedback devices (not shown), such as display screens, speakers, warning lights, and/or the like, which are configured to provide feedback from the controller 112 to the operator. The user interface 120 may, in turn, be communicatively coupled to the controller 112 via the communicative link 118 to permit the feedback to be transmitted from the controller 112 to the user interface 120. In addition, some embodiments of the user interface 120 may include one or more input devices (not shown), such as touchscreens, keypads, touchpads, knobs, buttons, sliders, switches, mice, microphones, and/or the like, which are configured to receive user inputs from the operator. In one embodiment, the user interface 120 may be mounted or otherwise positioned within the cab 22 of the vehicle 12. However, in alternative embodiments, the user interface 120 may mounted at any other suitable location.

In several embodiments, the controller 112 may be configured to determine when one or more ground-engaging tools (e.g., one or more shanks 38) of the implement 10 are plugged. In general, a ground-engaging tool may be plugged when a sufficient amount of field materials (e.g., soil, residue, and/or the like) has accumulated on and/or adjacent to the tool such that the operation of the tool is inhibited. As described above, the implement 10 and/or the vehicle 12 may include one or more sensors 108, with each sensor 108 configured to capture data indicative of plugging of one or more of the ground-engaging tools of the implement 10. In this regard, as the implement 10 is moved across the field, the controller 112 may receive the data from the sensor(s) 108 (e.g., via the communicative link 118). Thereafter, the controller 112 may be configured to process/analyze the received sensor data to determine when the ground-engaging tool(s) is plugged. For instance, in one embodiment, the controller 112 may be configured to determine that the ground-engaging tool(s) is plugged when the amount of accumulated field materials on and/or adjacent to such tool(s) has exceeded a predetermined threshold amount. As such, the controller 112 may include a suitable algorithm(s) stored within its memory device(s) 116 that, when executed by the processor(s) 114, allows the controller 112 to determine when the ground-engaging tool(s) is plugged based on the received sensor data. In one embodiment, when it is determined that the ground-engaging tool(s) is plugged, the controller 112 may be configured to transmit instructions to the user interface 120 (e.g., the communicative link 118) instructing the user interface 120 to provide a notification to the operator of the implement/vehicle 10/12 indicating that such tool(s) is plugged. However, in alternative embodiments, the controller 112 may be configured to determine when the ground-engaging tool(s) of the implement 10 is plugged based on any other suitable input (e.g., an operator input to the user interface 120).

Furthermore, when it is determined that the ground-engaging tool(s) of the implement 10 is plugged, the controller 112 may be configured to initiate "tripping" such tool(s). In general, a ground-engaging tool may be tripped when the tool is moved from the soil-penetrating position (e.g., as shown in FIG. 2) to the lifted position (e.g., as shown in FIG. 3). As described above, the implement 10 may include one or more actuators 102, with each actuator 102 configured to move an associated ground-engaging tool (e.g., a shank 38) between the soil-penetrating and lifted positions. In this regard, when it is determined that the ground-engaging tool(s) of the implement 10 is plugged, the controller 112 may be configured to control the operation of the associated actuator(s) 102 such that the tool(s) is moved from the ground-penetrating position to the lifted position. For example, in such instances, the controller 112 may be configured to transmit instructions to the actuator(s) 102 (e.g., the communicative link 118) instructing the actuator(s) 102 to extend and/or retract in a manner that pivots or otherwise moves the associated ground-engaging tool(s) from the ground-penetrating position to the lifted position. After the ground-engaging tool(s) is at the lifted position, the accumulated field material plugging the tool(s) may pass underneath and/or around the tool(s), thereby de-plugging the tool(s).

Moreover, after the ground-engaging tool(s) is moved to the lifted position, the controller 112 may be configured to determine when the tool(s) is de-plugged. Specifically, in several embodiments, the controller 112 may be configured to continue processing/analyzing the received sensor data after the ground-engaging tool(s) is at the lifted position to determine when the tool(s) is de-plugged. For example, in one embodiment, the controller 112 may be configured to continue to monitor the presence of the accumulated field materials plugging the ground-engaging tool(s) after such tool(s) has been moved to the lifted position. As such, the controller 112 may be configured to determine that the ground-engaging tool(s) is de-plugged when the accumulated field materials are no longer present on an/or adjacent to the tool(s) (e.g., the accumulated field materials have passed underneath and/or around the tool(s)). Thereafter, the controller 112 may be configured to initiate notification of the operator of the implement/vehicle 10/12 indicating that the tool(s) has been de-plugged. For example, the controller 112 may be configured to transmit instructions to the user interface 120 (e.g., the communicative link 118) instructing the user interface 120 to provide a notification to the operator indicating that the ground-engaging tool(s) has been de-plugged. Furthermore, in several embodiments, when it is determined that the ground-engaging tool(s) of the implement 10 have been de-plugged, the controller 112 may be configured to control the operation of the associated actuator(s) 102 such that the tool(s) is moved from the lifted position to the ground-engaging position. For example, in such instances, the controller 112 may be configured to transmit instructions to the actuator(s) 102 (e.g., the communicative link 118) instructing the actuator(s) 102 to extend and/or retract in a manner that pivots or otherwise moves the associated ground-engaging tool(s) from the lifted position to the ground-penetrating position. However, in alternative embodiments, the controller 112 may be configured to determine when the ground-engaging tool(s) is de-plugged based on any other suitable input.

Additionally, the controller 112 may be configured to initiate notification of the operator the implement/vehicle 10/12 when the ground-engaging tool(s) is not de-plugged within a predetermined time period. In general, once the ground-engaging tool(s) is moved to the lifted position, the accumulated field materials plugging the tool(s) may generally pass underneath and/or around the tool(s) before the predetermined time period (e.g., ten seconds) has elapsed. However, when the accumulated field materials remain present after the predetermined time period has elapsed, the plugging of the ground-engaging tool(s) may be severe enough that moving the tool(s) from the ground-penetrating position to the lifted position is insufficient to de-plug the tool(s). As such, in one embodiment, the controller 112 may be configured to monitor the presence of the accumulated field materials plugging the ground-engaging tool(s) after such tool(s) have been moved to the lifted position across the predetermined time period. When the accumulated field materials are no longer present on and/or adjacent to the ground-engaging tool(s) after the predetermined time period has elapsed, the controller 112 may be configured to initiate notification (e.g., via the user interface 120) of the operator of the implement/vehicle 10/12 indicating that the tool(s) has been de-plugged as described above. Conversely, the controller 112 may be configured to initiate notification (e.g., via the user interface 120) of the operator indicating that the tool(s) is plugged when the accumulated field materials are present on and/or adjacent to the tool(s) after the predetermined time period has elapsed. For example, the controller 112 may be configured to transmit instructions to the user interface 120 (e.g., the communicative link 118) instructing the user interface 120 to provide a notification to the operator indicating that the ground-engaging tool(s) is plugged. In such instances, the operator may perform any suitable corrective action(s) he/she deems necessary to de-plug the ground-engaging tool(s), such as halting the agricultural operation and manually removing the accumulated field materials from the implement 10.

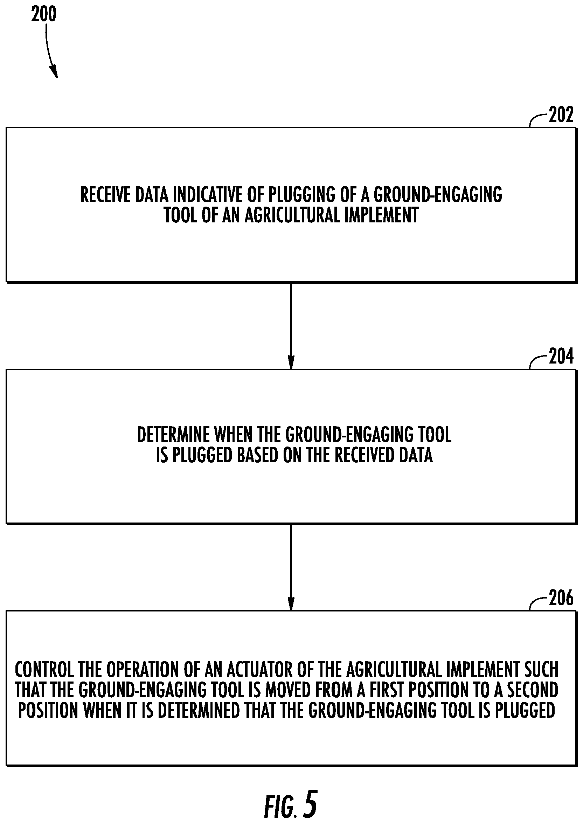

Referring now to FIG. 5, a flow diagram of one embodiment of a method 200 for de-plugging an agricultural implement is illustrated in accordance with aspects of the present subject matter. In general, the method 200 will be described herein with reference to the agricultural implement 10 and the system 100 described above with reference to FIGS. 1-4. However, it should be appreciated by those of ordinary skill in the art that the disclosed method 200 may generally be implemented with any agricultural implements having any suitable implement configuration and/or any system having any suitable system configuration. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the present disclosure.

As shown in FIG. 5, at (202), the method 200 may include receiving, with one or more computing devices, data indicative of plugging of a ground-engaging tool of an agricultural implement. For instance, as described above, the controller 112 may be configured to receive data indicative of plugging of one or more shanks 38 of the agricultural implement 10 from the sensor(s) 108.

Additionally, at (204), the method 200 may include determining, with the one or more computing devices, when the ground-engaging tool is plugged based on the received data. For instance, as described above, the controller 112 may be configured to determine when the shank(s) 38 are plugged based on the data received from the sensor(s) 108.

Moreover, as shown in FIG. 5, at (206), the method 200 may include controlling, with the one or more computing devices, the operation of an actuator of the agricultural implement such that the ground-engaging tool is moved from a first position to a second position when it is determined that the ground-engaging tool is plugged. For instance, as described above, when it is determined that one or more of the shanks 38 are plugged, the controller 112 may be configured to control the operation of the associated actuator(s) 102 to move the shank(s) 38 from the first or ground-penetrating position to the second or lifted position, thereby allowing accumulated fields material plugging the shank(s) 38 to pass underneath and/or around the shank(s) 38.

It is to be understood that the steps of the method 200 are performed by the controller 112 upon loading and executing software code or instructions which are tangibly stored on a tangible computer readable medium, such as on a magnetic medium, e.g., a computer hard drive, an optical medium, e.g., an optical disc, solidstate memory, e.g., flash memory, or other storage media known in the art. Thus, any of the functionality performed by the controller 112 described herein, such as the method 200, is implemented in software code or instructions which are tangibly stored on a tangible computer readable medium. The controller 112 loads the software code or instructions via a direct interface with the computer readable medium or via a wired and/or wireless network. Upon loading and executing such software code or instructions by the controller 112, the controller 112 may perform any of the functionality of the controller 112 described herein, including any steps of the method 200 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

## Claims

1. A system (100) for de-plugging an agricultural implement (10), the system comprising:
an implement frame (28);
a ground-engaging tool (38) pivotably coupled to the implement frame (28);
an actuator (102) coupled between the ground-engaging tool (38) and the implement frame (28), the actuator (102) configured to move the ground-engaging tool (38) relative to the implement frame (28) between a first position in which the ground-engaging tool (38) penetrates the soil (52) and a second position in which the ground-engaging tool (38) is lifted out of the soil (52);
a sensor (108) configured to capture data indicative of plugging of the ground-engaging tool (38); and
a controller (112) communicatively coupled to the sensor (108), the controller (112) configured to determine when the ground-engaging tool (38) is plugged based on the data received from the sensor (108), the controller (112) further configured to control an operation of the actuator (102) such that the ground-engaging tool (38) is moved from the first position to the second position when it is determined that the ground-engaging tool (38) is plugged **characterized in that**, after the ground-engaging tool (38) is moved to the second position, the controller (112) is further configured to determine when the ground-engaging tool (112) is de-plugged based on the data received from the sensor (108).

2. The system of claim 1, wherein the controller (112) is further configured to control the operation of the actuator (102) such that the ground-engaging tool (38) is moved from the second position to the first position when it is determined that the ground-engaging tool (38) is de-plugged.

3. The system of claim 1, wherein the controller (112) is further configured to initiate notification of an operator of the agricultural implement (10) when it is determined that the ground-engaging tool (38) is de-plugged.

4. The system of claim 1, wherein, after the ground-engaging tool (38) is moved to the second position, the controller (112) is further configured to monitor across a predetermined time period a presence of accumulated field materials (60) on or adjacent to the ground-engaging tool (38) that are plugging the ground-engaging tool (38).

5. The system of claim 4, wherein the controller (112) is further configured to determine that the ground-engaging tool (38) is de-plugged when the accumulated field materials (60) are no longer present on or adjacent to the ground-engaging tool (38) after the predetermined time period has elapsed.

6. The system of claim 4, wherein the controller (112) is further configured to initiate notification of an operator of the agricultural implement (10) that the ground-engaging tool (38) is plugged when the accumulated field materials (60) are present on or adjacent to the ground-engaging tool (38) after the predetermined time period has elapsed.

7. The system of claim 4, wherein the controller (112) is further configured to initiate notification of an operator of the agricultural implement (10) that the ground-engaging tool (38) is de-plugged when the accumulated field materials (60) are no longer present on or adjacent to the ground-engaging tool (38) after the predetermined time period has elapsed.

8. The system of claim 1, wherein the actuator comprises a fluid-driven actuator (102).

9. The system of claim 1, wherein the ground-engaging tool comprises a shank (38).

10. The system of claim 1, wherein the agricultural implement comprises a tillage implement (10).

11. A method for de-plugging an agricultural implement (10), the method comprising:
receiving, with one or more computing devices (112), data indicative of plugging of a ground-engaging tool (38) of the agricultural implement (10), the ground-engaging tool (38) being pivotably coupled to a frame (28) of the agricultural implement (10), the agricultural implement (10) further including an actuator (102) configured to move the ground-engaging tool (38) relative to the frame (28) between a first position in which the ground-engaging tool (38) penetrates the soil (52) and a second position in which the ground-engaging tool is lifted out of the soil (52);
determining, with the one or more computing devices (112), when the ground-engaging tool (38) is plugged based on the received data; and
controlling, with the one or more computing devices (112), an operation of the actuator (102) such that the ground-engaging tool (38) is moved from the first position to the second position when it is determined that the ground-engaging tool (38) is plugged; **characterized in that** the method further comprising
, after the ground-engaging tool (38) is moved to the second position:
determining, with the one or more computing devices (112), when the ground-engaging tool (38) is de-plugged based on the received data.

12. The method of claim 11, further comprising:
controlling, with the one or more computing devices (112), an operation of the actuator (102) such that the ground-engaging tool (38) is moved from the second position to the first position when it is determined that the ground-engaging tool (38) is de-plugged.

13. The method of claim 11, further comprising:
initiating, with the one or more computing devices (112), notification of an operator of the agricultural implement (10) when it is determined that the ground-engaging tool (38) is de-plugged.

14. The method of claim 11, wherein, after the ground-engaging tool is moved to the second position, the method further comprises:
monitoring, with the one or more computing devices (112), across a predetermined time period a presence of accumulated field materials (60) on or adjacent to the ground-engaging tool (38) that are plugging the ground-engaging tool (38).

15. The method of claim 14, further comprising:
determining, with the one or more computing devices (112), that the ground-engaging tool (38) is de-plugged when the accumulated field materials (60) are no longer present on or adjacent to the ground-engaging tool (38) after the predetermined time period has elapsed.

16. The method of claim 14, further comprising:
initiating, with the one or more computing devices (112), notification of an operator of the agricultural implement (10) that the ground-engaging tool (38) is plugged when the accumulated field materials (60) are present on or adjacent to the ground-engaging tool (38) after the predetermined time period has elapsed.

17. The method of claim 14, further comprising:
initiating, with the one or more computing devices (112), notification of an operator of the agricultural implement (10) that the ground-engaging tool (38) is de-plugged when the accumulated field materials (60) are no longer present on or adjacent to the ground-engaging tool (38) after the predetermined time period has elapsed.

## Patentansprüche

1. System (100) zum Reinigen eines landwirtschaftlichen Geräts (10), wobei das System umfasst:
einen Geräterahmen (28);
ein Bodenbearbeitungswerkzeug (38), das mit dem Geräterahmen (28) schwenkbeweglich verbunden ist;
eine Betätigungseinrichtung (102), die zwischen dem Bodenbearbeitungswerkzeug (38) und dem Geräterahmen (28) gekoppelt ist, wobei die Betätigungseinrichtung (102) dazu eingerichtet ist, das Bodenbearbeitungswerkzeug (38) relativ zu dem Geräterahmen (28) zwischen einer ersten Position, in der das Bodenbearbeitungswerkzeug (38) in den Erdboden (52) eindringt, und einer zweiten Position, in der das Bodenbearbeitungswerkzeug (38) aus dem Erdboden (52) gehoben ist, zu bewegen;
einen Sensor (108), der dazu eingerichtet ist, Daten zu erfassen, die charakteristisch sind für ein Verstopfen des Bodenbearbeitungswerkzeugs (38); und
eine Steuerung (112), die mit dem Sensor (108) in Kommunikationsverbindung steht, wobei die Steuerung (112) dazu eingerichtet ist, festzustellen, wenn das Bodenbearbeitungswerkzeug (38) gereinigt ist, auf Basis von Daten, die von dem Sensor (108) erhalten werden, wobei die Steuerung (112) weiterhin dazu eingerichtet ist, einen Betrieb der Betätigungseinrichtung (102) derart zu steuern, dass das Bodenbearbeitungswerkzeug (38) von der ersten Position in die zweite Position bewegt wird, wenn festgestellt wird, dass das Bodenbearbeitungswerkzeug (38) verstopft ist,
**dadurch gekennzeichnet, dass**,
nachdem das Bodenbearbeitungswerkzeug (38) in die zweite Position bewegt wurde, die Steuerung (112) weiterhin dazu eingerichtet ist, festzustellen, wenn das Bodenbearbeitungswerkzeug (38) gereinigt ist, auf Basis der Daten, die von dem Sensor (108) erhalten werden.

2. System nach Anspruch 1, wobei die Steuerung (112) weiterhin dazu eingerichtet ist, den Betrieb der Betätigungseinrichtung (102) derart zu steuern, dass das Bodenbearbeitungswerkzeug (38) von der zweiten Position in die erste Position bewegt wird, wenn festgestellt wird, dass das Bodenbearbeitungswerkzeug (38) gereinigt ist.

3. System nach Anspruch 1, wobei die Steuerung (112) weiterhin dazu eingerichtet ist, eine Benachrichtigung eines Bedieners des landwirtschaftlichen Geräts (10) zu veranlassen, wenn festgestellt wird, dass das Bodenbearbeitungswerkzeug (38) gereinigt ist.

4. System nach Anspruch 1, wobei, nachdem das Bodenbearbeitungswerkzeug (38) in die zweite Position bewegt wurde, die Steuerung (112) weiterhin dazu eingerichtet ist, ein Vorhandensein von angesammeltem Feldmaterial (60) an oder benachbart zu dem Bodenbearbeitungswerkzeug (38), welches das Bodenbearbeitungswerkzeug verstopft, über eine vorbestimmte Zeitdauer zu überwachen.

5. System nach Anspruch 4, wobei die Steuerung (112) weiterhin dazu eingerichtet ist, festzustellen, dass das Bodenbearbeitungswerkzeug (38) gereinigt ist, wenn das angesammelte Feldmaterial (60) nicht mehr an oder benachbart zu dem Bodenbearbeitungswerkzeug (38) vorhanden ist, nachdem die vorbestimmte Zeitdauer abgelaufen ist.

6. System nach Anspruch 4, wobei die Steuerung (112) weiterhin dazu eingerichtet ist, eine Benachrichtigung eines Bedieners des landwirtschaftlichen Geräts (10) zu veranlassen, dass das Bodenbearbeitungswerkzeug (38) verstopft ist, wenn das angesammelte Feldmaterial (60) an oder benachbart zu dem Bodenbearbeitungswerkzeug (38) vorhanden ist, nachdem die vorbestimmte Zeitdauer abgelaufen ist.

7. System nach Anspruch 4, wobei die Steuerung (112) weiterhin dazu eingerichtet ist, eine Benachrichtigung eines Bedieners des landwirtschaftlichen Geräts (10) zu veranlassen, dass das Bodenbearbeitungswerkzeug (38) gereinigt ist, wenn das angesammelte Feldmaterial (60) nicht mehr an oder benachbart zu dem Bodenbearbeitungswerkzeug (38) vorhanden ist, nachdem die vorbestimmte Zeitdauer abgelaufen ist.

8. System nach Anspruch 1, wobei die Betätigungseinrichtung eine fluid-gesteuerte Betätigungseinrichtung (102) umfasst.

9. System nach Anspruch 1, wobei das Bodenbearbeitungswerkzeug einen Zinken (38) umfasst.

10. System nach Anspruch 1, wobei das landwirtschaftliche Gerät ein Bodenbearbeitungsgerät (10) umfasst.

11. Verfahren zum Reinigen eines landwirtschaftlichen Geräts (10), wobei das Verfahren die folgenden Schritte umfasst:
Erhalten, mit einer oder mehreren Computereinrichtungen (112), von Daten, die charakteristisch für das Verstopfen eines Bodenbearbeitungswerkzeugs (38) des landwirtschaftlichen Geräts (10) sind, wobei das Bodenbearbeitungswerkzeug (38) mit einem Rahmen (28) des landwirtschaftlichen Geräts (10) schwenkbar verbunden ist, wobei das landwirtschaftliche Gerät (10) weiterhin eine Betätigungseinrichtung (102) umfasst, die dazu eingerichtet ist, das Bodenbearbeitungswerkzeug (38) relativ zu dem Rahmen (28) zwischen einer ersten Position, in der das Bodenbearbeitungswerkzeug (38) in den Erdboden (52) eindringt, und einer zweiten Position, in der das Bodenbearbeitungswerkzeug aus dem Erdboden (52) gehoben ist, zu bewegen;
Feststellen, mit einer oder mehreren Computereinrichtungen (112), wenn das Bodenbearbeitungswerkzeug (38) verstopft ist, auf Basis der erhaltenen Daten; und
Steuern, mit einer oder mehreren Computereinrichtungen (112), eines Betriebs der Betätigungseinrichtung (102) derart, dass das Bodenbearbeitungswerkzeug (38) von der ersten Position in die zweite Position bewegt wird, wenn festgestellt wird, dass das Bodenbearbeitungswerkzeug (38) verstopft ist;
**dadurch gekennzeichnet, dass**,
nachdem das Bodenbearbeitungswerkzeug (38) in die zweite Position bewegt wurde, das Verfahren den folgenden Schritt umfasst:
Feststellen, mit einer oder mehreren Computereinrichtungen (112), wenn das Bodenbearbeitungswerkzeug (38) gereinigt ist, auf Basis der erhaltenen Daten.

12. Verfahren nach Anspruch 11, weiterhin aufweisend:
Steuern, mit einer oder mehreren Computereinrichtungen (112), eines Betriebs der Betätigungseinrichtung (102) derart, dass das Bodenbearbeitungswerkzeug (38) von der zweiten Position in die erste Position bewegt wird, wenn festgestellt wird, dass das Bodenbearbeitungswerkzeug (38) gereinigt ist.

13. Verfahren nach Anspruch 11, weiterhin aufweisend:
Veranlassen, mit einer oder mehreren Computereinrichtungen (112), einer Benachrichtigung eines Bedieners des landwirtschaftlichen Geräts (10), wenn festgestellt wird, dass das Bodenbearbeitungswerkzeug (38) gereinigt ist.

14. Verfahren nach Anspruch 11, wobei, nachdem das Bodenbearbeitungswerkzeug in die zweite Position bewegt wurde, das Verfahren weiterhin aufweist:
Überwachen, mit einer oder mehreren Computereinrichtungen (112), über eine vorbestimmte Zeitdauer eines Vorhandenseins von angesammeltem Feldmaterial (60) an oder benachbart zu dem Bodenbearbeitungswerkzeug (38), welches das Bodenbearbeitungswerkzeug (38) verstopft.

15. Verfahren nach Anspruch 14, weiterhin aufweisend:
Feststellen, mit einer oder mehreren Computereinrichtungen (112), dass das Bodenbearbeitungswerkzeug (38) gereinigt ist, wenn das angesammelte Feldmaterial (60) nicht mehr an oder benachbart zu dem Bodenbearbeitungswerkzeug (38) vorhanden ist, nachdem die vorbestimmte Zeitdauer abgelaufen ist.

16. Verfahren nach Anspruch 14, weiterhin aufweisend:
Veranlassen, mit einer oder mehreren Computereinrichtungen (112), einer Benachrichtigung eines Bedieners des landwirtschaftlichen Geräts (10), dass das Bodenbearbeitungsgerät (38) verstopft ist, wenn das angesammelte Feldmaterial (60) an oder benachbart zu dem Bodenbearbeitungswerkzeug (38) vorhanden ist, nachdem die vorbestimmte Zeitdauer abgelaufen ist.

17. Verfahren nach Anspruch 14, weiterhin aufweisend:
Veranlassen, mit einer oder mehreren Computereinrichtungen (112), einer Benachrichtigung eines Bedieners des landwirtschaftlichen Geräts (10), dass das Bodenbearbeitungswerkzeug (38) gereinigt ist, wenn das angesammelte Feldmaterial (60) nicht mehr an oder benachbart zu dem Bodenbearbeitungswerkzeug (38) vorhanden ist, nachdem die vorbestimmte Zeitdauer abgelaufen ist.

## Revendications

1. Un système (100) de débourrage d'un outil agricole (10), le système comprenant :
un châssis d'outil (28) ;
un outil d'engagement avec le sol (38) couplé de manière pivotante au châssis d'outil (28) ;
un actionneur (102) couplé entre l'outil d'engagement avec le sol (38) et le châssis d'outil (28), l'actionneur (102) étant configuré pour déplacer l'outil d'engagement avec le sol (38) par rapport au châssis d'outil (28) entre une première position dans laquelle l'outil d'engagement avec le sol (38) pénètre dans le sol (52) et une seconde position dans laquelle l'outil d'engagement avec le sol (38) est soulevé hors du sol (52) ;
un capteur (108) configuré pour capturer des données indiquant le raccordement de l'outil d'engagement avec le sol (38) ; et
un dispositif de commande (112) couplé de manière communicative avec le capteur (108), le dispositif de commande (112) étant configuré pour déterminer le moment où l'outil d'engagement avec le sol (38) est raccordé en fonction des données reçues du capteur (108), le dispositif de commande (112) configuré en outre pour contrôler un fonctionnement de l'actionneur (102) de telle sorte que l'outil d'engagement avec le sol (38) est déplacé de la première position à la seconde position lorsqu'il est déterminé que l'outil d'engagement avec le sol (38) est raccordé,
**caractérisé en ce que**,
après le déplacement de l'outil d'engagement avec le sol (38) vers la seconde position, le dispositif de commande (112) est en outre configuré pour déterminer le moment où l'outil d'engagement avec le sol (112) est débourré en fonction des données reçues du capteur (108).

2. Système selon la revendication 1, dans lequel le dispositif de commande (112) est en outre configuré pour contrôler le fonctionnement de l'actionneur (102) de telle sorte que l'outil d'engagement avec le sol (38) est déplacé de la seconde position vers la première position lorsqu'il est déterminé que l'outil d'engagement avec le sol (38) est débourré.

3. Système selon la revendication 1, dans lequel le dispositif de commande (112) est en outre configuré pour lancer une notification d'un opérateur de l'outil agricole (10) lorsqu'il est déterminé que l'outil d'engagement avec le sol (38) est débourré.

4. Système selon la revendication 1, dans lequel, après le déplacement de l'outil d'engagement avec le sol (38) vers la seconde position, le dispositif de commande (112) est en outre configuré pour surveiller pendant une période de temps prédéterminée une présence de matières accumulées issues des champs (60) sur ou adjacentes à l'outil d'engagement avec le sol (38) qui bourrent l'outil d'engagement avec le sol (38).

5. Système selon la revendication 4, dans lequel le dispositif de commande (112) est en outre configuré pour déterminer que l'outil d'engagement avec le sol (38) est débourré lorsque les matières accumulées issues des champs (60) ne sont plus présentes sur ou adjacentes à l'outil d'engagement avec le sol (38) une fois la période de temps prédéterminée écoulée.

6. Système selon la revendication 4, dans lequel le dispositif de commande (112) est en outre configuré pour initier une notification à un opérateur de l'outil agricole (10) l'informant du bourrage de l'outil d'engagement avec le sol (38) lorsque les matières accumulées issues des champs (60) sont présentes sur ou adjacentes à l'outil d'engagement avec le sol (38) une fois la période de temps prédéterminée écoulée.

7. Système selon la revendication 4, dans lequel le dispositif de commande (112) est en outre configuré pour initier une notification à un opérateur de l'outil agricole (10) l'informant du débourrage de l'outil d'engagement avec le sol (38) lorsque les matières accumulées issues des champs (60) ne sont plus présentes sur ou adjacentes à l'outil d'engagement avec le sol (38) une fois la période de temps prédéterminée écoulée.

8. Système selon la revendication 1, dans lequel l'actionneur comprend un actionneur entraîné par un fluide (102).

9. Système selon la revendication 1, dans lequel l'outil d'engagement avec le sol comprend une tige (38).

10. Système selon la revendication 1, dans lequel l'outil agricole comprend un outil de travail du sol (10).

11. Procédé de débourrage d'un outil agricole (10), le procédé comprenant :
la réception, avec un ou plusieurs dispositifs informatiques (112), des données indiquant le bourrage d'un outil d'engagement avec le sol (38) de l'outil agricole (10), l'outil d'engagement avec le sol (38) étant couplé de manière pivotante à un châssis (28) de l'outil agricole (10), l'outil agricole (10) comprenant en outre un actionneur (102) configuré pour déplacer l'outil d'engagement avec le sol (38) par rapport au châssis (28) entre une première position dans laquelle l'outil d'engagement avec le sol (38) pénètre dans le sol (52) et une seconde position dans laquelle l'outil d'engagement avec le sol est soulevé hors du sol (52) ;
la détermination, avec le ou les dispositifs informatiques (112), du moment où l'outil d'engagement avec sol (38) présente un bourrage en fonction des données reçues ; et
le contrôle, avec le ou les dispositifs informatiques (112), d'un fonctionnement de l'actionneur (102) de telle sorte que l'outil d'engagement avec le sol (38) est déplacé de la première position vers la seconde position lorsqu'il est déterminé que l'outil d'engagement avec le sol (38) présente un bourrage ;
**caractérisé en ce que**
le procédé comprenant en outre, une fois l'outil d'engagement avec le sol (38) déplacé vers la seconde position :
la détermination, avec le ou les dispositifs informatiques (112), du moment où l'outil d'engagement avec sol (38) est débourré en fonction des données reçues.

12. Procédé selon la revendication 11, comprenant en outre :
le contrôle, avec le ou les dispositifs informatiques (112), d'un fonctionnement de l'actionneur (102) de telle sorte que l'outil d'engagement avec le sol (38) est déplacé de la seconde position vers la première position lorsqu'il est déterminé que l'outil d'engagement avec le sol (38) est débourré.

13. Procédé selon la revendication 11, comprenant en outre :
l'initiation, avec le ou les dispositifs informatiques (112), d'une notification à un opérateur de l'outil agricole (10) lorsqu'il est déterminé que l'outil d'engagement avec le sol (38) est débourré.

14. Procédé selon la revendication 11, dans lequel, une fois que l'outil d'engagement avec le sol a été déplacé vers la seconde position, le procédé comprend en outre :
la surveillance, avec le ou les dispositifs informatiques (112), pendant une période de temps prédéterminée, la présence de matières accumulées issues des champs (60) sur ou adjacentes à l'outil d'engagement avec le sol (38) qui bourrent l'outil d'engagement avec le sol (38).

15. Procédé selon la revendication 14, comprenant en outre :
la détermination, avec le ou les dispositifs informatiques (112), que l'outil d'engagement avec le sol (38) est débourré lorsque les matières accumulées issues des champs (60) ne sont plus présentes sur ou adjacentes à l'outil d'engagement avec le sol (38) une fois la période de temps prédéterminée écoulée.

16. Procédé selon la revendication 14, comprenant en outre :
l'initiation, avec le ou les dispositifs informatiques (112), d'une notification à un opérateur de l'outil agricole (10) indiquant que l'outil d'engagement avec le sol (38) présente un bourrage lorsque les matières accumulées issues des champs (60) sur ou adjacentes à l'outil d'engagement avec le sol (38) une fois la période de temps prédéterminée écoulée.

17. Procédé selon la revendication 14, comprenant en outre :
l'initiation, avec le ou les dispositifs informatiques (112), d'une notification à un opérateur de l'outil agricole (10) indiquant que l'outil d'engagement avec le sol (38) est débourré lorsque les matières accumulées issues des champs (60) ne sont plus présentes sur ou adjacentes à l'outil d'engagement avec le sol (38) une fois la période de temps prédéterminée écoulée.
